# EUROPEAN PATENT APPLICATION

(11) **EP 1 541 894 A2**
(43) Date of publication of application: **15.06.2005**
(21) Application number: 04106268.8
(22) Date of filing: 03.12.2004
(51) Int. Cl.: F16G 5/20

(54) **Reduced rib height multi-ribbed V-belt**

(30) Priority: 10.12.2003 US 732737
(71) Applicant: THE GOODYEAR TIRE & RUBBER COMPANY, Akron, Ohio 44316-0001 (US)
(72) Inventor: Feuerborn, Frank Joseph, 68502 Lincoln, Nebraska (US)
(74) Representative: Kutsch, Bernd

(57) **Abstract**

A multiple-ribbed V-belt (10) having a plurality of circumferentially extending ribs (16) defined by a plurality of grooves (14) formed in a belt body (12). The V-belt (10) is formed according to standard dimensions of a given V-belt section, except that the groove depth (D₁) and overall belt thickness (H₁) are reduced. In one embodiment, the depth of the grooves (14) and the overall thickness (H₁) of the belt (10) are reduced by truncating the tips of the ribs (16).

## Description

### Field of the Invention

The present invention relates generally to a power transmission belt, and more particularly to multiple ribbed V-belts, according to claim 1.

### Background of the Invention

Multiple ribbed or grooved power transmission belts in the prior art have essentially taken two basic forms. In one form, a plurality of individual V-belt sections of essentially trapezoidal cross-section have been bonded together by a flexible tie band of rubber and fabric. Each of the individual V-belts include a reinforcement usually in the form of stress-resisting cords comprising materials such as cotton, nylon, rayon, polyester, wire, glass, or any other suitable material, as known in the art. Typical belts of this type are disclosed in US-A-2,263,960, 3,404,577, 3,523,461 and 3,564,933.

In another form, the multiple-ribbed belts are essentially flat power transmission belts having a plurality of circumferentially extending substantially V-shaped or trapezoidal-shaped ribs formed on the inner surface thereof. The ribs are intended to mate or register in correspondingly aligned V-shaped pulley grooves. In this type belt, the reinforcing cords are disposed above the ribs. US-A- 2,728,239 and US-A- 2,802,511 are typical of this latter type multiple-ribbed belt.

Typical examples of standard multiple-ribbed V-belts are the Poly-V-belts@ available from the Goodyear Tire and Rubber Company in Akron, Ohio. The multiple-ribbed V-belts are used in power transmission applications in conjunction with multiple-grooved sheaves or pulleys to provide belts having smaller overall dimensions for a pre-determined power capacity than other types of belts.

A common failure mode for power transmission belts like multiple-ribbed V-belts is the development of cracks at the rib tips. Accordingly, there is a need for an improved belt capable of providing increased durability, particularly with regard to improved resistance against cracks forming at the rib tips.

### Summay of the Invention

The present invention provides a power transmission belt, particularly a multiple-ribbed V-belt, that exhibits improved durability life. The belt is formed according to standard dimensions for a given V-belt section, with the exception that the rib height and overall belt thickness are reduced. Standards defining the dimensions and forms of various types of these V-belts have been established by organizations such as the Society of Automotive Engineers (SAE) and the American National Standards Institute (ANSI). While a reduction in overall belt thickness would generally be expected to result in decreased life, testing of V-belts of the present invention has shown that durability life is extended.

In an exemplary embodiment, the rib height (or groove depth) and overall belt thickness are reduced by truncating the rib tips of an otherwise standard section V-belt. In another embodiment, the rib tips of a K-section V-belt are truncated up to approximately 0.015 inch, resulting in belts having overall thicknesses of about 0.145 to 0.155 inch. In yet another embodiment, the V-belts of the present invention further include transverse slots formed in the belt to define cogs along the ribs.

### Brief Description of the Figures

FIG.1 is a perspective view depicting an exemplary multiple-ribbed V-belt according to the present invention;
FIG. 2 is a cross-sectional view of the V-belt of FIG. 1;
FIG. 3 is a partial perspective view depicting an alternative embodiment of the V-belt of the present invention; and
FIG. 4 is a graphical plot of experimental test data for exemplary belts according to the present invention.

### Detailed Description

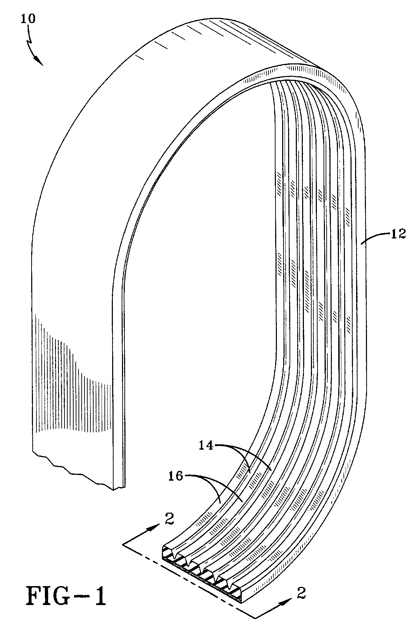

Referring to FIG. 1, there is shown an exemplary multiple-ribbed V-belt 10 according to the present invention. The V-belt 10 comprises a belt body 12 of an integral unitary construction and formed in a continuous loop. The body 12 of the belt 10 is formed from flexible, resilient material, for example flexible polymeric material such as natural or synthetic rubber, or other elastomeric materials. A plurality of circumferential grooves 14 are formed in the belt body 12 and are spaced apart in a direction transverse to the belt body 12 to define a plurality of circumferentially extending ribs 16.

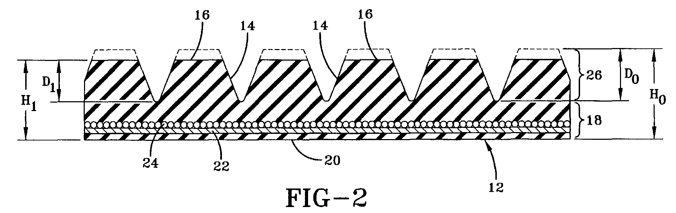

FIG. 2 is a cross-sectional view of the belt of FIG.1. The body 12 of the belt 10 includes a first portion 18 having a generally rectangular configuration, one face of which defines a first surface 20 of the belt 10. The first portion 18 may be formed at least in part from a plurality of layers of rubberized woven fabric material 22 such as cotton, polyester or nylon, or combinations thereof. This portion further includes a plurality of circumferentially extending reinforcing cords 24.

A second portion 26 of the belt body 12 includes the plurality of ribs 16 defined by the plurality of grooves 14. Each rib 16 has a cross-sectional configuration adapted to conform to a correspondingly aligned groove in a pulley or sheave in which the V-belt is intended to be used. The ribs 16 may be formed from a fiber-loaded elastomeric material and may include one or more fabric reinforcement layers (not shown) for crack resistance, if desired. Accordingly, each rib 16 may have a generally trapezoidal or truncated V-shaped cross-sectional configuration and each groove 14 has a generally V-shaped cross-sectional configuration generally corresponding to that of the ribs 16.

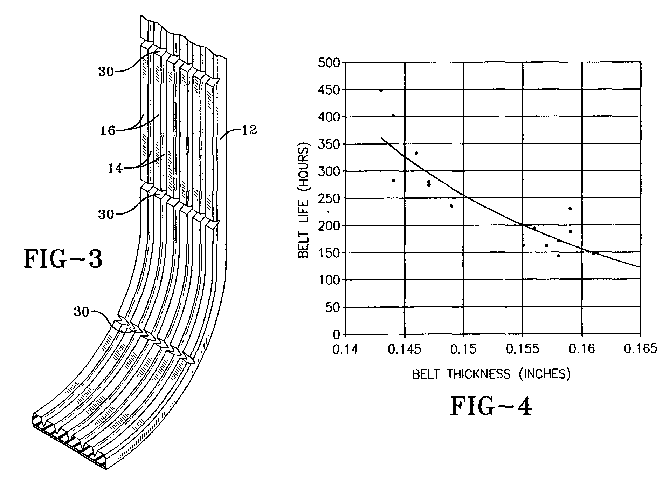

Due to the resistance to elongation of the reinforcing cords 24, relative to the other materials which make up the belts 10, the flexural neutral axis of the belt 10 remains generally in the plane of the cords 24 regardless of variations in geometry of the ribs 16. For added flexibility, the second portion 26 of the belt body 12 may further include a plurality of transverse slots 30 formed in the belt body 12 to define cogs along the ribs 16, as shown in the alternate embodiment depicted in FIG. 3.

The multiple-ribbed V-belt 10 of the present invention is formed according to standard dimensions for a given type of V-belt section, with the exception that the depth D₁ of the grooves 14 defining the ribs 16, and the overall thickness H₁ of the belt body 12 are reduced from a specified depth D₀ and thickness H₀ of the standard V-belt section. In an exemplary embodiment, the groove depth D₁ is reduced by truncating the tips of the ribs 16, while maintaining the general rib profile according to the specification. Specifically, the relative angles of the grooves 14 defining the ribs 16 are maintained constant. Advantageously, the truncated rib tips eliminate material of the V-belt 10 that would otherwise experience high stress in use. These high-stress portions of the ribs 16 are where the stress cracks develop. In other words, truncating the rib tips moves the tip surface closer to the neutral axis. Since the location of the neutral axis remains unchanged, the stresses at the truncated rib tips are reduced because flexural stress is proportional to the distance from the neutral axis.

Testing of multiple-ribbed V-belts formed according to the present invention indicates that the inventive V-belt provides the unexpected result of increased flex life in high temperature durability tests. While, conventional wisdom predicts that the durability of the V-belt should decrease as the overall thickness of the belt is decreased, the exemplary V-belts of the present invention exhibited increased durability in flex life tests, as described below.

Several exemplary V-belts according to the invention were fabricated to have standard K-section belt dimensions, with the exception that the overall thickness of the belts were reduced from approximately 0.16 inch to a thickness of approximately 0.145 inch to approximately 0.155 inch by truncating the rib tips from 0.005 up to approximately 0.015 inch. This resulted in a corresponding groove depth from 0.085 inch to 0.070 inch. The belts were tested for durability according to the SAE J-2432 high temperature constant tension test at an elevated temperature of 121 °C. The belts were periodically inspected for B and C level cracks, according to the specification. Belts were determined to have failed when eight B and C level cracks were observed in the belts.

Results of the test are depicted in FIG. 4. As shown in FIG. 4, the exemplary belts exhibited increased life as the rib tips were increasingly truncated up to 0.015 inch, whereby the overall belt thickness was reduced to approximately 0.145 inch, i.e. by 0.005 to 0.015 inch.

## Claims

1. A power transmission belt (10) comprising:
a belt body (12) formed in a continuous loop; and
a plurality of generally v-shaped grooves (14) formed in said belt body (12) and spaced apart to define a plurality of circumferentially extending ribs (16);
**characterized in that** said belt body (12) and said grooves (14) are formed according to standard dimensions for a given V-belt section, but have an overall thickness (H₁) and a groove depth (D₁) which are reduced from the standard dimensions for the V-belt section.

2. The belt of claim 1, wherein said ribs (16) have a profile formed according to a given V-belt section and said groove depth is reduced by truncating the tip of the ribs.

3. The V-belt of claim 1 or 2, wherein said groove depth is reduced by 0.005 to 0.015 inch.

4. The V-belt of at least one of claims 1 through 3, wherein said belt body (12) and said ribs (16) are sized and arranged according to standards for a K-section V-belt, except that said grooves (14) have a depth of 0.06 to 0.09 inch, preferably 0.070 inch, and said belt (10) has an overall thickness (H₁) of 0.145 inch to 0.155 inch.

5. The V-belt of at least one of claims 1 through 4, further comprising transverse slots formed in said belt (10) to define cogs along said ribs.
